# EUROPEAN PATENT SPECIFICATION

(11) **EP 2 994 557 B1**
(45) Date of publication and mention of the grant of the patent: **03.07.2019**
(21) Application number: 14794490.4
(22) Date of filing: 06.05.2014
(51) Int. Cl.: C25C 3/20, C25C 3/08, F27D 17/00, F27D 11/02, F27D 9/00, F28D 15/02, F28D 15/00

(54) **ALUMINIUM ELECTROLYSIS CELL COMPRISING SIDEWALL TEMPERATURE CONTROL SYSTEM**
ALUMINIUMELEKTROLYSEZELLE MIT SEITENWANDTEMPERATURREGELUNGSSYSTEM
CELLULE D'ÉLECTROLYSE DE L'ALUMINIUM COMPRENANT UN SYSTÈME DE RÉGULATION THERMIQUE DE PAROIS LATÉRALES

(30) Priority: 06.05.2013 NO 20130640
(43) Date of publication of application: 16.03.2016
(73) Proprietor: Goodtech Recovery Technology AS, 1065 Oslo (NO)
(72) Inventor: SEDLAK, Veroslav, N-1065 Oslo (NO)
(74) Representative: Acapo AS
(86) International application number: PCT/NO2014/050072
(87) International publication number: WO 2014/182176

(56) References cited:
- WO-A1-2012/039624
- WO-A1-2013/055228
- WO-A1-2013/055229
- WO-A1-2013/105867
- GB-A- 2 076 428
- US-A- 4 026 352
- US-A- 4 903 761
- US-A- 5 275 232
- US-A1- 2008 111 287
- US-A1- 2012 186 785

## Description

### Background of the Invention

### Technical Field

The invention relates to heat regulation in general and particularly improved method and system for maintaining a working fluid level in a plurality of evaporation tubes covering a large area, suitable for use for control of layer formation over an extended area in an aluminium electrolysis cell and exploitation of thermal energy.

### Background Art

During production of aluminium with electrolysis technology of today based on so called Hall-Héroult cells, the operations of the cells depend on the formation and maintenance of a protective layer of frozen electrolyte in the side walls of the cell. This frozen bath is called side layer and protects the side lining of the cells against chemical and mechanical wear, and is an essential condition for achieving long lifetime of the cells. The crystallized bath operates simultaneously as a buffer for the cell with regards of changes in the heat balance. During operations the heat generation and the heat balance of the cell will vary due to unwanted disturbances of the operation (changes in bath chemical composition, alumina concentration, changes in interpolar distances, anode effect etc.) and desired activities of the cells (metal tapping, change of anode, fire, etc.). This causes the thickness of the layer of the periphery of the cell to change and in some cases the layer will disappear entirely in parts of the periphery. Then the side lining will be exposed to the liquid electrolyte and metal, which in combination with corrosive gasses will lead to corrosion of the side lining materials causing these to erode. Loss of ledge can result in in metal tap-out. It is therefore of importance to control formation of layer and layer stability in Hall-Heroult cells, especially for cells with high current densities. Model calculations show that it will be difficult to maintain the side layer of the cell due to large heat generation. For such cells and for traditional cells with heat balance problems it will therefore be a condition for a long life cell that one is able to maintain the layer protecting the side lining.

All aluminium producers tries to minimize specific energy consumption per kilo produced aluminium (kWh/kg Al). The heat generation of the electrolysis cells takes place as a result of ohmic voltage drops in the cell, for instance in current feeds, produced metal and particularly in the electrolyte. Approximately 45 % of input energy to the electrolysis cell is used for aluminium production, rest is waste energy. Data from literature indicates that approximately 40 % of the total heat loss from the cells is through the side lining. Due to the high heat loss and wish to control the protecting frozen layer in the side lining it is a preferable to place elements for heat extraction in this area of the cell.

There is a need for optimizing control of layer formation and heat extraction. In order to optimize both of these objectives at the same time it is important that heat extraction takes place as close to the formed side layer as possible. This will make it possible to extract the thermal energy at high temperature.

Furthermore, due to the large scale of electrolysis cells, it is also desirable to control said layer formation over an extended area since loss of layer formation over a small area can be damaging. The traditional method of removing heat was to use natural (and in some cases forced) air convection over the entire surface area of the cell, resulting in limited potential for exploitation of the removed heat.

From the known art it is referred to WO/2004/083489. This describes a side lining formed with hollows for flow-through of a cooling medium. The manufacturing process of this, however, is complex and requires the side linings to be moulded with hollows formed preferably before the material is sintered.

From the known art it is also referred to patent application NO 20101321, corresponding to WO/2012/039624, of the present applicant. This describes a system for control of layer formation in an aluminium electrolysis cell and exploitation of heat comprising side lining provided with at least one hollow for heat transfer and at least one heat tube, characterized in that the heat tube is provided by the hollow and that the hollow is at least one canal provided along the surface of the side lining. The manufacturing process of this, however, is complex and requires providing the side linings with a large number of heat tubes, typically heat pipes, along the surface of the side lining, each requiring separate cooling.

It is also referred to flat heat pipes, also known as two-dimensional heat pipes, based on plates forming thin planar capillaries. This design is useful for heat spreaders in height sensitive applications, however as the capillaries are small and thin the total heat transfer is small. Also this design features large metal areas that are not actual parts of the capillaries, further reducing the total heat transfer. Furthermore this design is typically flat whereas some surface roughness of a side lining should be expected, leading to poor thermal contact. This means that flat heat pipes are not suited for cooling a side lining.

One should also refer to heat tube assemblies relying on a return line. Where single heat tubes are two phase flow systems wherein evaporated gas and condensed liquid flow in opposite directions there are single phase flow systems wherein the working fluid in the liquid phase absorb heat in the hot end and evaporates, flowing to the cold end. The gas condenses into liquid at the cold end and is returned to the hot end along a separate line, here called the return line. By keeping the return line colder than the boiling point of the working fluid, a single phase flow is achieved also in the return line. Such a system can comprise a plurality of heat tubes connected together using a collecting manifold at the cold end and a distribution manifold at the hot end wherein the manifolds are also connected directly or indirectly by the return line. The problem with this solution is that the operation of the assembly is affected by the collector angle with respect to gravity, so that liquid is discharged into the heat tubes. Otherwise liquid can accumulate in the condenser and cause the heat pipes to run dry and be damaged by heat.

In general it is a problem that efficient cooling over a large area requires a system having a large number of parts which in turn adds complexity and cost while also reduces overall reliability.

There is therefore a need for a method and a system overcoming the above mentioned problems.

### Summary of the Invention

### Problems to be Solved by the Invention

Therefore, a main objective of the present invention is to provide an improved method and system for maintaining a working fluid level in a plurality of heat tubes covering a large area, suitable for use for control of layer formation over an extended area in an aluminium electrolysis cell and exploitation of heat.

### Means for Solving the Problems

The objective is achieved according to the invention by a heat tube assembly for control of layer formation in an aluminium electrolysis cell as defined in the preamble of claim 1, having the features of the characterising portion of claim 1, and a method for control of layer formation in an aluminium electrolysis cell as defined in the preamble of independent method claim 11, having the features of the characterising portion of claim 11, and an electrolysis cell comprising the heat tube assembly according to claims 1-10. A number of non-exhaustive embodiments, variants or alternatives of the invention are defined by the dependent claims.

The present invention attains the above-described objective by a heat tube assembly comprising a plurality of evaporation tubes for absorbing heat by evaporation of a working fluid from a liquid phase to a gas phase, a collector in fluid communication with the upper end of the evaporation tubes, a distribution manifold in fluid communication with the lower end of the evaporation tubes, wherein the collector and distribution manifold are also connected by a plurality of return lines, wherein a first return line is provided connecting a first end of the collector with the distribution manifold, and a second return line is provided connecting a second end of the collector at an opposite side of the first end of the collector with the distribution manifold.

In one embodiment the collector is a collecting manifold having at least one external condenser. In another embodiment the collector is a manifold having an internal condenser.

In one embodiment the return lines are substantially parallel. In a preferred embodiment the return lines are two phase flow lines. In a preferred embodiment the collecting manifold is provided with a phase separator. In another embodiment the return lines are crossed.

In yet another embodiment the first and the second return lines are connected to a third return line which in turn is connected to the distribution manifold.

In a preferred embodiment the return lines are attached to the lowest part of the external condenser.

In one embodiment the system further comprises a collector for uncondensable gases.

Preferably the return lines should be dimensioned so that the distribution manifold can be supplied by liquid through return lines at either ends without having to rely on the return lines at both ends at the same time.

Preferably the return lines should have thermal coefficient of expansion in order to avoid mechanical strain on changing operating temperature.

### Effects of the Invention

The technical differences over prior art is that the present invention comprises at least two return lines wherein at least one return line is provided on opposite sides of the heat tube assembly.

The technical effect of this difference is that when the heat tube assembly is tilted in either direction there will always be an outlet at the lower end of the collector assuring the collector is always efficiently drained. If the collector is not efficiently drained working fluid would accumulate in the collector and thus reduce the amount of working fluid in the distribution manifold and ultimately the level of working fluid in evaporation tubes thus reducing the efficiency of the heat pipe assembly's capacity of removing heat and reducing the efficiency of the condensation unit. This could lead to failure of the electrolytic cell.

Dimensioning the return lines so that the distribution manifold can be supplied by liquid through return lines at either ends without having to rely on the return lines at both ends at the same time assures that the collector does not accumulate too much working fluid.

These effects provide in turn several further advantageous effects:
- it makes it possible to provide a convenient solution having few parts for cooling a large area, and
- it provides greatly simplified installation and connection in that a heat tube assembly requires far fewer cooling units for the collecting manifold than the number of evaporation tubes.

### Brief Description of the Drawings

The invention will be further described below in connection with exemplary embodiments which are schematically shown in the drawings, wherein:
Fig. 1 shows state of the art of a Hall-Heroult cell in the form of a side lining block, and a steel shell or casing,
Fig. 2 shows a detail section of the embodiment of figure 1 together with section as seen from the side,
Fig. 3 shows state of the art of a Hall-Heroult cell in the form of a side lining block with hollows provided with heat tube, and a steel shell or casing,
Fig. 4a shows an end view of a typical embodiment of a heat tube assembly inserted into a side lining block
Fig. 4b shows a front view of a typical embodiment of a heat tube assembly inserted into a side lining block
Fig. 4c shows a side view of a typical embodiment of a heat tube assembly inserted into a side lining block
Fig. 5a shows an end view of a first embodiment of a heat tube assembly provided with two return lines connected via a joint having a third return line connecting the joint with the distribution manifold.
Fig. 5b shows a front view of a first embodiment of a heat tube assembly provided with two return lines connected via a joint having a third return line connecting the joint with the distribution manifold.
Fig. 5c shows a side view of a first embodiment of a heat tube assembly provided with two return lines connected via a joint having a third return line connecting the joint with the distribution manifold.
Fig. 6a shows an end view of a first embodiment of a heat tube assembly provided with two return substantially parallel lines connected to the distribution manifold at opposite ends.
Fig. 6b shows a front view of a first embodiment of a heat tube assembly provided with two return substantially parallel lines connected to the distribution manifold at opposite ends.
Fig. 6c shows a side view of a first embodiment of a heat tube assembly provided with two return substantially parallel lines connected to the distribution manifold at opposite ends.
Fig. 6d shows a detail view of a cross section of a first embodiment of a heat tube assembly showing a return line connected to the distribution manifold and an evaporation tube.
Fig. 7a shows an end view of a second embodiment of a heat tube assembly provided with two return substantially parallel lines connected to the distribution manifold at opposite ends, wherein the return lines are two phase flow lines.
Fig. 7b shows a front view of a second embodiment of a heat tube assembly provided with two return substantially parallel lines connected to the distribution manifold at opposite ends, wherein the return lines are two phase flow lines.
Fig. 7c shows a side view of a second embodiment of a heat tube assembly provided with two return substantially parallel lines connected to the distribution manifold at opposite ends, wherein the return lines are two phase flow lines.
Fig. 7d shows a detail view of a cross section of a second embodiment of a heat tube assembly showing a two phase flow line connected to the collecting manifold having a phase separator.
Fig. 8a shows an end view of a first embodiment of a heat tube assembly provided with two crossed return lines connected to the distribution manifold at opposite ends.

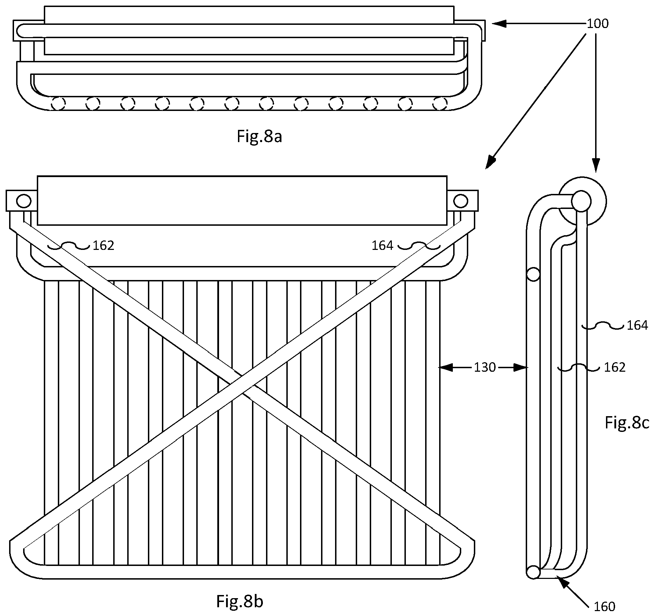

Fig. 8a shows a front view of a first embodiment of a heat tube assembly provided with two crossed return lines connected to the distribution manifold at opposite ends.
Fig. 8c shows a side view of a first embodiment of a heat tube assembly provided with two crossed return lines connected to the distribution manifold at opposite ends.

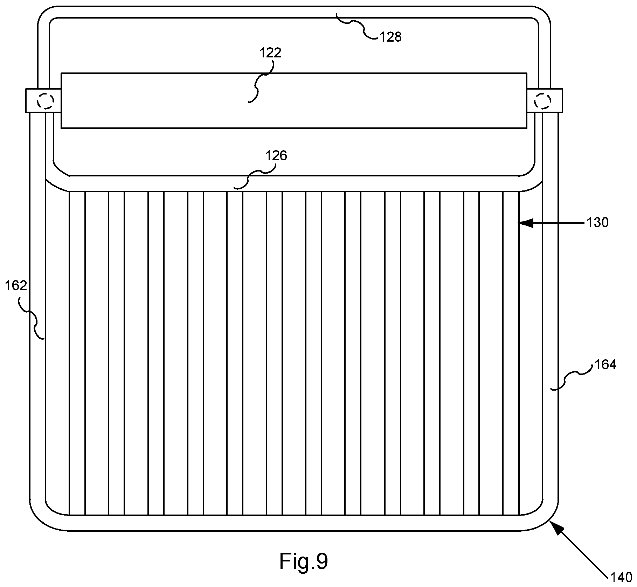

Fig. 9 shows a front view of an embodiment of a heat tube assembly provided with a collector for uncondensable gases.

### Description of the Reference Signs

The following reference numbers and signs refer to the drawings:

| | |
|---|---|
| 1 | Anode hanger |
| 2 | Anode carbon block |
| 3 | Liquid electrolyte |
| 4 | Liquid aluminium |
| 5 | Cathode carbon |
| 6 | Frozen electrolyte |
| 7 | Insulating brickwork |
| 8 | Steel shell |
| 9 | Ramming paste |
| 10 | Heat insulation |
| 11 | Side lining block |
| 12 | Heat tube |
| 13 | Condensation unit for heat tube |
| 14 | Condensation fins |
| 15 | Thermal paste between side lining block and steel shell |
| 100 | Heat tube assembly |
| 102 | Working fluid |
| 103 | Working fluid in liquid phase |
| 104 | Working fluid in gas phase |
| 110 | Heat tube assembly cold end |
| 120 | Collector |
| 122 | External condensation unit for collector |
| 124 | Internal condensation unit for collector |
| 126 | Collecting manifold |
| 128 | Collector for uncondensable gases |
| 130 | Evaporation tube |
| 132 | Upper end of evaporation tube |
| 134 | Lower end of evaporation tube |
| 140 | Distribution manifold |
| 150 | Phase separator |
| 160 | Return line assembly |
| 162 | First return line |
| 164 | Second return line |
| 166 | Return line joint |
| 168 | Third return line |
| 169 | Two phase flow lines |

### Detailed Description

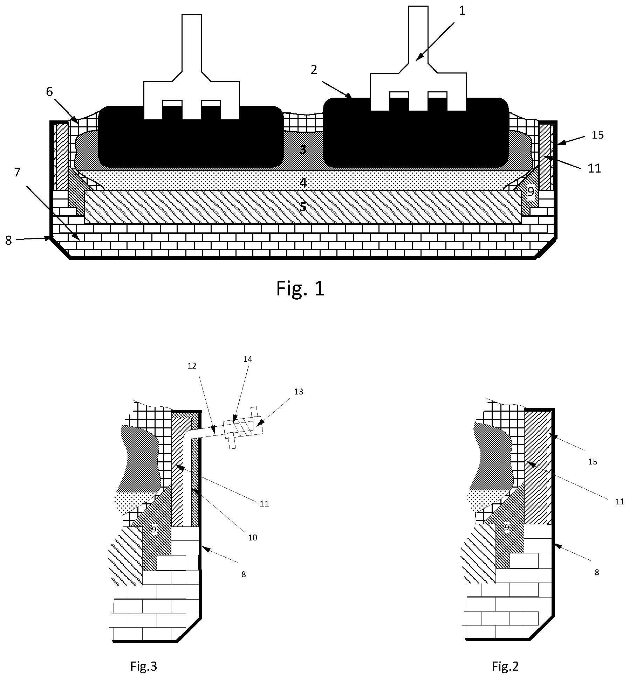

The invention will in the following be described in more details with references to the drawings showing embodiments. Fig. 1 shows state of the art of a Hall-Heroult cell in the form of a side lining block 11 and a steel shell 8 or casing. Details are shown in fig. 2. A state of the art cell using active cooling as known from previously mentioned prior art is shown in fig. 3.

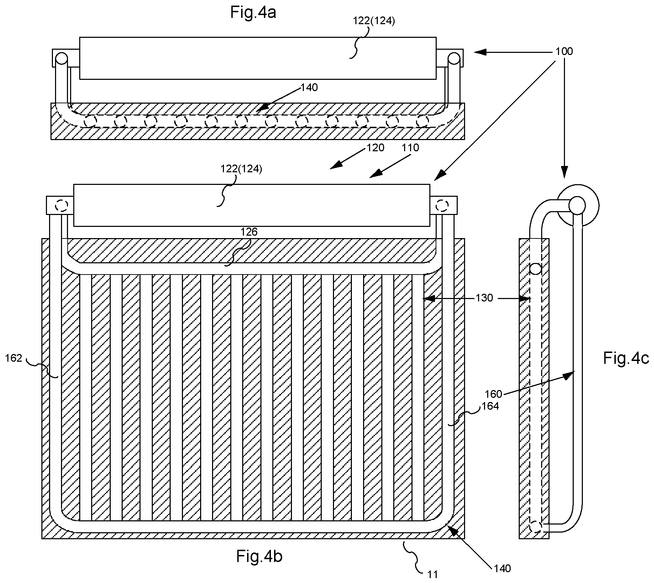

With side lining one should here understand this to mean the side lining block 11, optionally in the case of state of the art together with the heat insulation 10, wherein the side lining block is optionally provided with heat tube 12. The side lining block 11 is typically a ceramic block, typically in the form of silicon carbide (SiC). Fig. 4a shows an end view of such a typical embodiment of a heat tube assembly inserted into a side lining block. This is shown in different views in Fig. 4b and Fig. 4c.

### Principles forming the basis of the invention

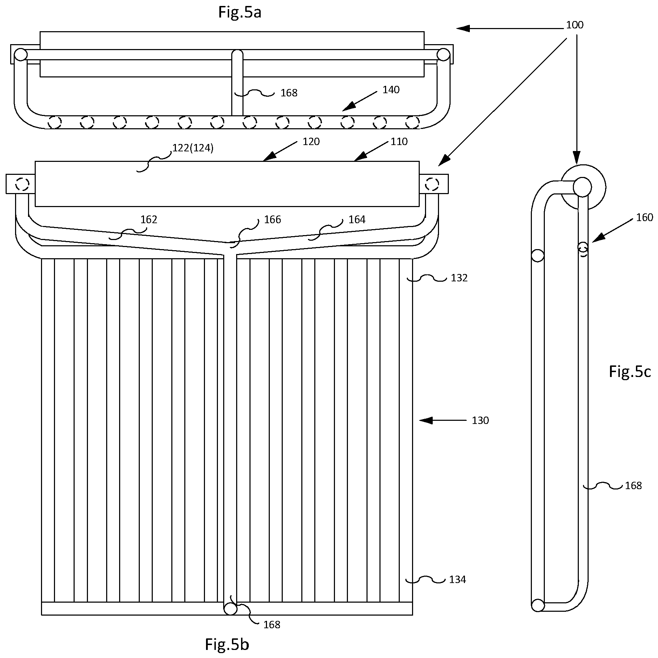

Fig. 5a shows an end view of a first illustrative embodiment of a heat tube assembly provided with two return lines connected via a joint having a third return line connecting the joint with the distribution manifold. This embodiment is also shown in a front view in Fig. 5b and in a side view in Fig. 5c.

### Heat Tubes

By heat tube 12 there are two embodiments intended: "heat pipe" where a wick or other capillary effect pulls the liquid back to the hot end, and "thermosyphon" where the gravity pulls the liquid back to the hot end. The hot end is also known as the evaporation section. Both principles can be applied for this invention, though a thermosyphon it is preferred that the tube body is provided with a substantially downward inclination so that fluid in the liquid phase can run down the length of the tube. Since heat tubes of either type operate by removing heat by phase transition liquid to gas, it is preferred that the heat tube allows liquid to reach the lowest point in the heat tube.

A typical Hall-Heroult cell comprises a steel casing or shell 8, surrounding a side lining block 11. The steel casing is in good thermal contact with side lining block due to a thermal paste. The side lining block, on the opposite side from the steel casing, is in contact with the electrolyte. By use of thermal control the heat extracted from the electrolyte builds up a layer of frozen electrolyte on the side lining, leaving the remaining part of the electrolyte 3 in the liquid phase.

Central in the invention is the realisation that a heat tube assembly according to the invention will provide a simplified system and method for removing heat from a large area compared to using a plurality of traditional heat tubes.

Also central to the invention is the division of a heat tube into several distinct parts:
- evaporation tubes, corresponding to the evaporation end of a heat tube, where heat is absorbed through evaporation phase change in the working fluid
- heat tube assembly cold end, corresponding to the condensation end of a heat tube, where heat is released through condensation phase change in the working fluid
- connecting parts comprising manifolds and return lines, ensuring operations of the cycle between evaporation and condensation, having no direct corresponding part of a traditional heat tube

These parts will be disclosed in more details below.

### Evaporation Tubes

The evaporation tubes 130 have an upper end 132 and a lower end 134 and absorb heat by evaporation.

### Heat Tube Assembly Cold End

The heat tubes absorb heat which has to be removed in order to condense the working fluid and this takes place in the heat tube assembly cold end 110. Typically this part extends outside the sidelining in order to access parts and connect to an external cooling circuit. The heat tube assembly cold end comprises means for collecting working fluid gas and means for condensing the working fluid to a liquid. It should be noted that these two means can be combined into a single unit.

### Collector

The collector 120 connects the upper ends of the plurality of evaporation tubes, collects the fluid in the gas phase from the evaporation tubes and condenses the fluid into the liquid phase. The collector also connects to the return lines and transfers fluid in the liquid phase into at least one of the return lines.

The collecting manifold 126 permits the use of a plurality of evaporation tubes wherein the condensation end in effect is the collector.

The collector represents a means for receiving gas phase, condensing it to liquid phase which is returned, and can be provided in several embodiments.

In a first embodiment the collector is a sub system comprising a collecting manifold 126 at the heat tube assembly cold end 110 provided with at least one external condensation unit 122. The external condensation unit is preferably end fed with the gas phase from the collecting manifold and the return lines are connected to both ends of the condensation unit. This geometry places the connectors at the ends leaving the condensation unit centre region available for enclosure with a cooling mantle connected to a cooling circuit for removal of heat.

The collecting manifold 126 receives gas from the heat pipes and directs the gas to a condensation unit. While the figures show the manifold being connected at either end to a condensation unit it is also possible to have a condensation unit at only one end, or two condensation units, one at either end. It is preferred to connect to a condensation unit at an end position but it is also possible to connect elsewhere, for instance at the middle of the manifold.

The external condensation unit typically comprises a central condensation chamber surrounded by a cooled mantle, typically cooled by oil. The central condensation chamber typically extends at the ends beyond the cooled mantle, wherein gas enters and liquid exits.

In a second embodiment the collector is effectively a manifold provided with an internal condensation unit 124. The condensation takes place around a cold part internal to the condensation unit, for instance a transverse pipe inside which a cooling medium flows.

In both embodiments the condensation creates a body of liquid from which body liquid flows into at least one of the return lines.

A person skilled in the art will also realise there are further embodiments for a collector having the same technical effect.

### Distribution Manifold

The distribution manifold 140 connects the lower ends of the plurality of evaporation tubes and provides said evaporation tubes with fluid in the liquid phase. The distribution manifold also connects to the return lines and receives fluid in the liquid phase into at least one of the return lines.

The distribution manifold provides each evaporation tube with a substantially similar amount of working fluid in the liquid phase, so that all evaporation tubes are operating at similar capacity.

The distribution manifold represents a means for receiving liquid phase and distributing this to a plurality of evaporation tubes, and can be provided in several embodiments.

### Return Lines

While the return lines should be provided at opposite sides of the collecting manifold, there is strictly speaking not the same necessity to connect the return lines to the opposite sides of the distribution manifold. Typically the distribution manifold will be fully filled with liquid working fluid and liquid would extend into the evaporation tubes. This means the return lines could be connected to a third return line that empties liquid working fluid into the distribution manifold.

### Best Modes of Carrying Out the Invention

The embodiment of the apparatus according to the invention shown in Fig. 4a, 4b and 4c comprises a heat tube assembly 100 attached to a side lining block 11. The heat tube assembly 100 comprises a collecting manifold 126 from which a plurality of evaporation tubes 130 extend, and a heat tube assembly cold end 110 extending outside the collecting manifold where a condensation unit 120 is provided.

It is preferred that all evaporation tubes are operating at similar capacity and accordingly it is important that each evaporation tube receives a substantially similar amount of working fluid in the liquid phase which is ensured using a distribution manifold. Typically the liquid is received directly from the collector via the return lines. The technical effect of this is to even out the liquid level.

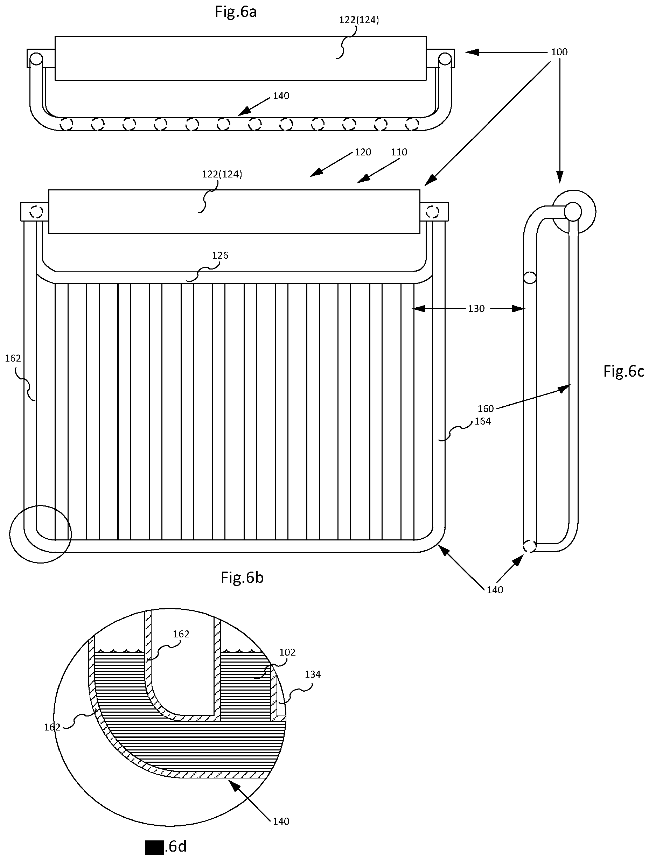

Figs. 6a, 6b and 6c show an assembly where two substantially parallel return lines are used, wherein
a first return line is provided connecting a first end of the collector with the distribution manifold, and a second return line is provided connecting a second end of the collector at an opposite side of the first end of the collector with the distribution manifold wherein the first and the second return lines are connected to opposite sides of the distribution manifold.

The return lines are dimensioned so that the distribution manifold can be supplied by liquid through return lines at either ends without having to rely on the return lines at both ends draining liquid from the collecting manifold at the same time. This means that the heat tube assembly can be misaligned by an angle of more than 3 degrees from horizontal while still operating within specifications.

Fig. 6d shows a detail of a part in Fig. 6b indicated with a circle, showing how return line 162 is connected with liquid working fluid 102 to distribution manifold 140 connecting to a lower end of an evaporation tube 134. Lower end in this context means the part of an evaporation tube typically down with respect to gravity when installed according to the preferred embodiment, and generally the part of the evaporation tube that is attached to the distribution manifold.

For a condensation unit the high speed of the gas flow can interfere with the liquid flow. It is therefore preferred to position the gas inlet at a different position from the liquid outlet, where the return lines are connected. It is preferred that the liquid outlet is located at the lowest parts of the condensation unit.

### Alternative Embodiments

A number of variations on the above can be envisaged. For instance one can envisage the return lines being crossed rather than parallel. The technical effect of this is that liquid working fluid being discharged from the lowest point of the collecting into the highest part of the distribution manifold. This is shown in Figs. 8a, 8b and 8c.

Having many evaporation tubes in the heat tube assembly avoids the problem of single or few points of failure with associated risks. A similar approach can be taken with return lines to reduce probability of failure. One such solution is to combine a set of parallel return lines with a set of crossed return lines.

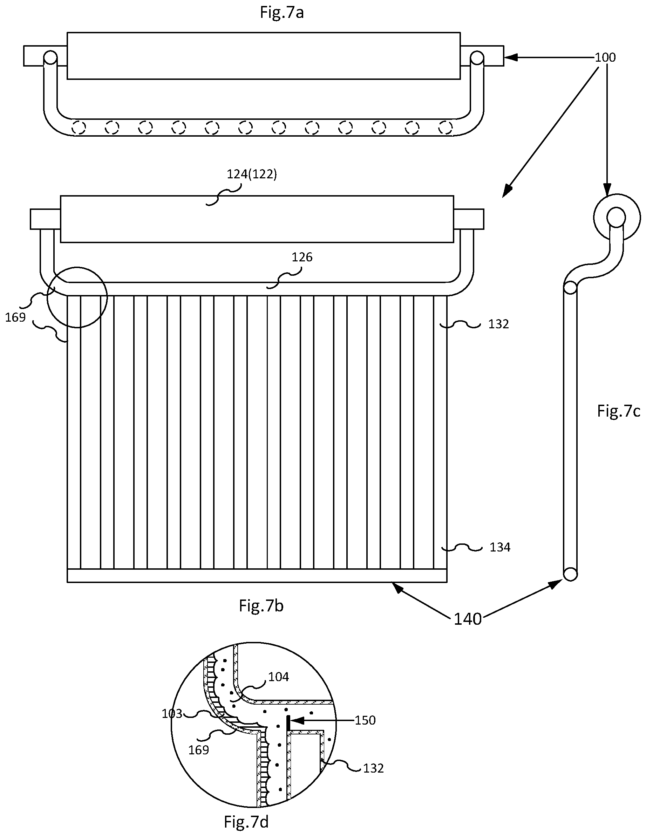

Figs. 7a, 7b and 7c show a variation on the embodiment of Figs. 6a, 6b and 6c show an assembly where two substantially parallel return lines are used that operate in a two phase flow mode. It is preferred that the outermost evaporation tubes or the tubes closest to the lines connecting the collector to the collecting manifold operate in two phase mode. To avoid having the gas flow flowing so fast that the liquid flow is restricted or even partially reversed, it has been found that the return lines preferably have a larger cross section than the single phase flow evaporation tubes.

Fig. 7d shows a detail of a part in Fig. 7b indicated with a circle, showing how two phase flow line 169 first connects the condenser first with the collecting manifold 126, and then from the collecting manifold to the distribution manifold 140 of Fig. 7b (not shown in inset).

Liquid working fluid 103 flows from the condenser to the collecting manifold and is there directed by the separator 150 into the two phase flow line 169 of the distribution manifold 140. A phase separator 150 is shown, confining liquid to the two phase flow lines, preventing liquid from entering evaporation tubes. Upper end in this context means the part of an evaporation tube typically up with respect to gravity when installed according to the preferred embodiment, and generally the part of the evaporation tube that is attached to the collecting manifold.

Figs. 5a, 5b and 5c show an assembly where return lines are connected to a third return line 168 at a return line joint 166 which in turn is connected to the distribution manifold.

The heat tube assembly is intended to be filled with a working fluid that alternates between a liquid phase and a gas phase. However, also other fluids can enter the system such as gases that will not condense in the normal operations of the system. It is desirable to remove such gases. One reason is that such gases displace working fluid in the gas phase and thus reduce the overall efficiency of the heat tube assembly.

Fig. 9 shows a front view of an embodiment of a heat tube assembly provided with a collector for uncondensable gases. Typically the heat tube assembly can be provided with a collector for uncondensable gases, preferably positioned at the highest point of the heat tube assembly with inlet from both sides of the condenser.

Uncondensable gases can be removed from the system in several ways. In a first method the system can be cooled down until only an insignificant fraction of the working fluid is in the gas phase at which point the remaining gas is uncondensable gas. The gas can then be evacuated through the collector for uncondensable gases 128. In a second method one can exploit the fact that working fluid in the gas phase enters the condensation unit at a velocity high enough to use the inner walls of the condensation unit as a separator. Uncondensable gases are typically lighter than the working fluid and will thus separate from the working fluid. The uncondensable gases can therefore be extracted from a position offset from the inner walls of the condensation unit and extracted through the collector for uncondensable gases 128.

### Industrial Applicability

The invention according to the application finds use in an aluminium electrolysis cell and exploitation of the heat. More specifically it can be used with an electrolysis cell comprising a system as described above.

## Claims

1. A heat tube assembly (100), for control of layer formation in an aluminium electrolysis cell and exploitation of heat, said electrolysis cell comprising a side lining (11) and a shell (8);
**characterized in that** the assembly comprises
a plurality of evaporation tubes (130) for absorbing heat by evaporation of a working fluid (102) from a liquid phase to a gas phase;
a collector (120) in fluid communication with the upper end (132) of the evaporation tubes,
a distribution manifold (140) in fluid communication with the lower end (134) of the evaporation tubes,
wherein the collector and distribution manifold are also connected by a plurality of return lines (160, 162, 164), wherein
a first return line (162) is provided connecting a first end of the collector with the distribution manifold, and
a second return line (164) is provided connecting a second end of the collector at an opposite side of the first end of the collector with the distribution manifold.

2. The assembly according to claim 1, wherein the collector is a collecting manifold having at least one external condensation unit for collector (122).

3. The assembly according to claim 1, wherein the collector is a manifold having an internal condensation unit for collector (124).

4. The assembly according to claims 1 - 3, wherein the return lines are substantially parallel.

5. The assembly according to claim 4, wherein the return lines are two phase flow lines (169).

6. The assembly according to claim 5, wherein the collecting manifold is provided with a phase separator (150).

7. The assembly according to claims 1 - 3, wherein the return lines are crossed.

8. The assembly according to claims 1 - 3, wherein the first and the second return lines are connected to a third return line (168) which in turn is connected to the distribution manifold.

9. The assembly according to claim 1 - 2, wherein the return lines are attached to the lowest part of the external condensation unit for collector (122).

10. The assembly according to claim 1 - 9, further comprising a collector for uncondensable gases.

11. A method for control of layer formation in an aluminium electrolysis cell, **characterized in** conducting the heat away using said heat tube assembly according to claim 1.

12. An electrolysis cell comprising a heat tube assembly according to claims 1 - 10.

## Patentansprüche

1. Heizrohranordnung (100) zur Steuerung der Schichtbildung in einer Aluminiumelektrolysezelle und der Wärmenutzung, wobei die Elektroysezelle eine Seitenverkleidung (11) und eine Ofenwanne (8) aufweist:
**dadurch gekennzeichnet dass** die Anordnung aufweist:
eine Mehrzahl von Verdampfungsrohren (130) zum Absorbieren von Wärme durch Verdampfung eines Arbeitsfluids (102) von einer flüssigen Phase in eine Gasphase;
einen Kollektor (120) in Fluidverbindung mit dem oberen Ende (132) der Verdampfungsrohre, eine Verteilerleitung (140) in Fluidverbindung mit dem unteren Ende (134) der Verdampfungsrohre,
wobei der Kollektor und die Verteilerleitung ebenfalls mit einer Mehrzahl von Rückleitungen (160, 162, 164) verbunden sind, wobei
eine erste Rückleitung (162) vorgesehen ist, die ein erstes Ende des Kollektors mit der Verteilerleitung verbindet, und
eine zweite Rückleitung (164) vorgesehen ist, die ein zweites Ende des Kollektors an einer gegenüber liegenden Seite des ersten Endes des Kollektors mit der Verteilerleitung verbindet.

2. Anordnung nach Anspruch 1, wobei der Kollektor eine Sammelverteilerleitung ist, die mindestens eine externe Kondensationseinheit für den Kollektor (122) aufweist.

3. Anordnung nach Anspruch 1, wobei der Kollektor ein Verteiler ist, der eine interne Kondensationseinheit für den Kollektor (124) aufweist.

4. Anordnung nach den Ansprüchen 1 bis 3, wobei die Rückleitungen im Wesentlichen parallel sind.

5. Anordnung nach Anspruch 4, wobei die Rückleitungen Zweiphasen - Flussleitungen (169) sind.

6. Anordnung nach Anspruch 5, wobei die Sammelverteilerleitung mit einem Phasenseparator (150) versehen ist.

7. Anordnung nach den Ansprüchen 1 bis 3, wobei die Rückleitungen gekreuzt sind.

8. Anordnung nach den Ansprüchen 1 bis 3, wobei die ersten und zweiten Rückleitungen mit einer dritten Rückleitung (168) verbunden sind, die wiederum mit der Verteilerleitung verbunden ist.

9. Anordnung nach den Ansprüchen 1 bis 2, wobei die Rückleitungen an dem untersten Abschnitt der externen Kondensationseinheit für den Kollektor (122) befestigt sind,

10. Anordnung nach Anspruch 1 bis 9, die des Weiteren einen Kollektor für nichtkondensierbare Gase aufweist.

11. Verfahren zur Steuerung der Schichtbildung in einer Aluminiumelektrolysezelle, **dadurch gekennzeichnet, dass** die Wärme durch Verwendung der Heizrohranordnung nach Anspruch 1 abgeführt wird.

12. Elektrolysezelle mit einer Wärmerohranordnung nach den Ansprüchen 1 bis 10.

## Revendications

1. Assemblage de tube à chaleur (100), pour contrôler la formation de couches dans une cellule d'électrolyse de l'aluminium et exploiter la chaleur, la dite cellule d'électrolyse comprenant un revêtement de paroi intérieure (11) et une coque (8), **caractérisé en ce que** l'assemblage comprend :
- une pluralité de tubes d'évaporation (130) pour absorber la chaleur par l'évaporation d'un fluide moteur (102) d'une phase liquide à une phase gazeuse,
- un collecteur (120) an communication fluide avec l'extrémité supérieure (132) des tubes d'évaporation,
- un distributeur (140) en communication fluide avec l'extrémité inférieure (134) des tubes d'évaporation,
- où le collecteur et le distributeur sont également connectés par une pluralité de voies de retour (160, 162, 164), dans lesquelles
- une première voie de retour (162) est prévue connectant une première extrémité du collecteur avec le distributeur et
- une deuxième voie de retour (164) est prévue connectant une deuxième extrémité du collecteur, du côté opposé à la première extrémité du collecteur, avec le distributeur.

2. Assemblage selon la revendication 1, **caractérisé en ce que** le collecteur est un manifold collecteur présentant au moins une unité externe de condensation pour le collecteur (122) .

3. Assemblage selon la revendication 1, **caractérisé en ce que** le collecteur est un manifold collecteur présentant une unité interne de condensation pour le collecteur (124).

4. Assemblage selon les revendications 1 à 3, **caractérisé en ce que** les voies de retour sont essentiellement parallèles.

5. Assemblage selon la revendication 4, **caractérisé en ce que** les voies de retour sont des voies de circulation à deux phases (169).

6. Assemblage selon la revendication 5, **caractérisé en ce que** le manifold collecteur est équipé d'un séparateur de phase (150).

7. Assemblage selon les revendications 1 à 3, **caractérisé en ce que** les voies de retour se croisent.

8. Assemblage selon les revendications 1 à 3, **caractérisé en ce que** la première et la deuxième voies de retour sont connectées à une troisième voie de retour (168) sui est à son tour connectée au manifold distributeur.

9. Assemblage selon les revendications 1 à 2, **caractérisé en ce que** les voies de retour sont connectées à la partie la plus inférieure de l'unité externe de condensation pour le collecteur (122).

10. Assemblage selon les revendications 1 à 9, comprenant en outre un collecteur pour les gaz incondensables.

11. Méthode de contrôle de la formation de couches dans une cellule d'électrolyse de l'aluminium, **caractérisée en ce qu'**elle comprend d'évacuer la chaleur en utilisant le dit assemblage de tube à chaleur selon la revendication 1.

12. Cellule d'électrolyse comprenant un assemblage de tube à chaleur selon les revendications 1 à 10.
